(19) Europäisches Patentamt

European Patent Office

Office européen des brevets

(11) EP 0 881 366 B1

(12) **EUROPÄISCHE PATENTSCHRIFT**

(45) Veröffentlichungstag und Bekanntmachung des Hinweises auf die Patenterteilung:
**21.11.2001 Patentblatt 2001/47**

(51) Int Cl.[7]: **F01N 3/20**

(21) Anmeldenummer: **98107227.5**

(22) Anmeldetag: **21.04.1998**

(54) **Zusatzheizung für Kraftfahrzeuge mit Verbrennungsmotoren**

Additional heating for vehicles with internal combustion engines

Chauffage supplémentaire pour véhicules avec moteurs à combustion interne

(84) Benannte Vertragsstaaten:
**DE FR GB**

(30) Priorität: **21.05.1997 DE 19721439**

(43) Veröffentlichungstag der Anmeldung:
**02.12.1998 Patentblatt 1998/49**

(73) Patentinhaber: **OMG AG & Co. KG**
**63457 Hanau (DE)**

(72) Erfinder:
- **Gieshoff, Jürgen, Dr.**
  **63599 Biebergemünd (DE)**
- **Lox, Egbert, Dr.**
  **63457 Hanau (DE)**

- **Kreuzer, Thomas, Dr.**
  **61184 Karben (DE)**

(74) Vertreter: **Herrmann, Reinhard**
**OMG AG**
**FI-PAT**
**Postfach 1351**
**63403 Hanau (DE)**

(56) Entgegenhaltungen:
**EP-A- 0 839 995     US-A- 5 033 264**

- **PATENT ABSTRACTS OF JAPAN vol. 010, no. 261 (M-514), 5. September 1986 (1986-09-05) -& JP 61 085523 A (TOYOTA MOTOR CORP), 1. Mai 1986 (1986-05-01)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Zusatzheizung für Kraftfahrzeuge mit Verbrennungsmotoren.

Zur Verminderung des Kraftstoffverbrauches wird der Wirkungsgrad von Verbrennungsmotoren ständig verbessert. Als Folge davon nimmt die üblicherweise für die Beheizung des Fahrgastraumes verwendete Abwärmeleistung der Motoren ab. Dies führt insbesondere bei Dieselfahrzeugen und Hybridfahrzeugen mit einer Kombination aus Elektromotor und Verbrennungsmotor dazu, daß die Abwärmeleistung selbst bei Dauerbetrieb nicht mehr für die Beheizung des Fahrgastraumes ausreicht.

Es sind sogenannte Standheizungen bekannt, die während der Kaltstartphase oder auch im Teillastbetrieb als Zusatzheizung dienen. Die Wärmeerzeugung geschieht hierbei mit Hilfe eines Flammenbrenners durch Verbrennen von Kraftstoff. Nachteilig ist hierbei der erhöhte Kraftstoffverbrauch sowie die Bildung von Stickoxiden bei der Verbrennung. Die Verwendung einer solchen Standheizung macht also die Bemühungen um verbesserte Motorwirkungsgrade zunichte. Darüber hinaus ergeben sich zusätzliche Probleme bei der Einhaltung der gesetzlichen Abgasgrenzwerte.

Zur Einhaltung dieser Grenzwerte sind Neufahrzeuge mit katalytischen Abgasreinigungsanlagen ausgerüstet. Sie bestehen aus einem sogenannten Konvertergehäuse, welches einen Teil der Auspuffleitung des Fahrzeuges bildet. Im Konvertergehäuse sind Abgasreinigungskatalysatoren angeordnet, die zumeist aus einem monolithischen Block bestehen, welcher von parallelen Strömungskanälen für das Abgas durchzogen ist. Die Wände der Strömungskanäle dieser sogenannten Wabenkörper sind mit katalytisch aktiven Beschichtungen versehen, die die im Abgas des Verbrennungsmotors enthaltenen Schadstoffe Kohlenmonoxid, unverbrannte Kohlenwasserstoffe und Stickoxide mit hohem Wirkungsgrad zu Kohlendioxid, Wasser und Stickstoff umsetzen.

Bei der Schadstoffumsetzung am Katalysator wird durch Oxidation von Kohlenmonoxid und den unverbrannten Kohlenwasserstoffen Verbrennungswärme freigesetzt, die den Katalysator und das Abgas zusätzlich aufheizen. Bei hohen Schadstoffanteilen im Abgas kann die zusätzliche Exotherme zur Zerstörung des Katalysators führen.

Die DE 39 20 159 A1 beschreibt die Beheizung eines Kraftfahrzeuges durch einen Katalysator mit Wärmetauscher. Hierbei wird die bei der katalytischen Umsetzung von einem Reaktionsgemisch frei werdende Energie zu Heizzwecken ausgenutzt. Der Katalysator ist zu diesem Zweck als Wärmetauscher ausgebildet oder einem solchen vorgeschaltet. Vor Betriebsbeginn wird der Katalysator durch eine elektrische Beheizung auf die zur Umsetzung nötige Temperatur aufgeheizt, wodurch der Schadstoffausstoß minimiert und gleichzeitig sehr schnell Wärme zu Heizzwecken zur Verfügung gestellt wird. Durch Eindüsen von Kraftstoff und Zuführen von Verbrennungsluft vor dem Katalysator kann dieser als katalytischer Brenner genutzt werden, wodurch auch der Betrieb als Standheizung möglich ist.

Nachteilig bei dieser Lösung ist der sehr große technische Aufwand. Sie erfordert eine elektrische Beheizung des Katalysators. Ist der Katalysator mit einem integrierten Wärmetauscher ausgestattet, so ist seine thermische Masse sehr groß. Dies hat entsprechend negative Auswirkungen auf die Aufheizgeschwindigkeit und auf die dafür benötigte elektrische Energie. Durch die Kühlung infolge des Wärmetauschers besteht die Gefahr, daß die notwendige Reaktionstemperatur nicht erreicht wird und damit eine vollständige Umsetzung der Schadstoffe nicht möglich ist. Wird der Wärmetauscher statt dessen hinter dem Katalysator angeordnet, so besteht die Gefahr, daß der Katalysator bei Überdosierungen des Kraftstoffes infolge der hohen Exotherme thermisch zerstört wird.

Die DE 43 40 463 A1 beschreibt ebenfalls die Nutzung einer Abgasanlage für die Beheizung eines Fahrzeugs. Vor dem Abgasreinigungskatalysator ist ein Flammenbrenner angeordnet, der heiße Abgase erzeugt und die Betriebsbereitschaft des Katalysators durch Beheizung gewährleistet. Zur Nutzung des Brenners für die Beheizung des Fahrzeugs ist ein Wärmetauscher zur Entnahme von Energie aus dem Abgasstrom zwischen Brenner und Katalysator angeordnet. Auch stromabwärts des Katalysators kann ein Wärmetauscher vorgesehen werden.

Aufgabe der vorliegenden Erfindung ist es, eine Zusatzheizung für Kraftfahrzeuge mit Verbrennungsmotoren anzugeben, welche eine Ausnutzung des Abgasreinigungskatalysators als katalytischen Brenner ermöglicht und dabei gleichzeitig eine thermische Zerstörung des Katalysators ohne großen Regelungsaufwand sicher zu vermeiden erlaubt.

Diese Aufgabe wird durch eine Zusatzheizung für ein Kraftfahrzeug mit Verbrennungsmotor gelöst, welche ein in die Abgasleitung des Kraftfahrzeugs eingebautes Konvertergehäuse mit einem Abgasreinigungskatalysator enthält sowie einen vor und/oder hinter dem Katalysator in das Konvertergehäuse integrierten Wärmetauscher und eine vor dem Katalysator in die Abgasleitung integrierte Apparatur zur Eindüsung eines Kraftstoff/Luft-Gemisches, wobei der Abgasreinigungskatalysator von seiner Abgas-Eintrittsfläche zur Austrittsfläche von einer Vielzahl von Strömungspfaden für das Abgas durchzogen wird. Die Zusatzheizung ist dadurch gekennzeichnet, daß der Katalysator wenigstens eine strahlungsaktive Fläche besitzt und der oder die Wärmetauscher Austauschflächen aufweisen, die sowohl mit den strahlungsaktiven Flächen des Katalysators in einen freien Strahlungsaustausch als auch mit dem Abgas in einen Wärmeaustausch treten können und daß das Verhältnis der strahlungsaktiven Flächen des Katalysators zu seiner restlichen Oberfläche zwischen 0,5 und 50, bevorzugt zwischen 2 und 10, liegt.

Bevorzugt wird ein monolithischer Abgasreinigungskatalysator verwendet.

Unter "strahlungsaktiven Flächen" werden hier diejenigen Flächenteile der Oberfläche des monolithischen Katalysators verstanden, deren Wärmeabstrahlung nicht durch Halterungen oder isolierende Matten behindert ist. Dies sind in der Regel die Ein- und Austrittsflächen für das Abgas.

Die monolithischen Katalysatoren können unterschiedliche Geometrien aufweisen. Die Ortsangaben "hinter dem Katalysator" beziehungsweise "vor dem Katalysator" sind daher stets bezogen auf die Strömungsrichtung des Abgases zu verstehen.

Für die zusätzliche Beheizung des Fahrgastraumes wird erfindungsgemäß die Restwärme des Motorabgases sowie die am Katalysator bei der Schadstoffumsetzung frei werdende Reaktionswärme genutzt. Zu diesem Zweck ist der in jedem Neufahrzeug vorhandene Abgasreinigungskonverter mit einem oder mehreren indirekten Wärmetauschern kombiniert, die dem Abgas Wärme entziehen und sie auf ein Wärmeträgermedium übertragen. Hierbei kann es sich zum Beispiel um Frischluft für den Fahrgastraum handeln, die auf diese Weise aufgeheizt wird. Bei Fahrzeugen mit Kühlwasserkreislauf ist es zweckmäßig, die Wärmetauscher der Zusatzheizung in den Kühlwasserkreislauf einzubinden.

Vor dem Katalysator ist eine Apparatur zur Eindüsung eines Kraftstoff/Luft-Gemisches in die Abgasleitung vorgesehen. Eine Eindüsung wird dann vorgenommen, wenn die Abgaswärme und die am Katalysator frei werdende Wärme bei der Schadstoffumsetzung nicht mehr ausreichen, um die benötigte Wärmemenge für die Beheizung des Kraftfahrzeuges zur Verfügung zu stellen. In diesem Fall wird das zusätzlich eingedüste Kraftstoff/Luft-Gemisch am Katalysator katalytisch verbrannt.

Das Problem einer möglichen thermischen Schädigung des Katalysators bei Betrieb als katalytischer Brenner wird erfindungsgemäß dadurch gelöst, daß wenigstens eine der strahlungsaktiven Flächen des Katalysators in einen freien Strahlungsaustausch mit einem Wärmetauscher eintreten kann und somit eine Strahlungskühlung des Katalysators gegeben ist, die einen inhärent sicheren Schutz des Katalysators vor thermischer Überlastung ohne zusätzliche Regelkomponenten gewährleistet.

Erfindungsgemäß wird also die Temperatur des Katalysators durch eine Strahlungskühlung auf einen für den Katalysator unschädlichen Maximalwert begrenzt. Im Falle einer Strahlungskühlung ist die von der strahlungsaktiven Fläche auf die Austauschfläche des Wärmetauschers übertragene Leistung $\Delta P$ unter Berücksichtigung der Abstrahlung von beiden Flächen gegeben durch

$$\Delta P = \sigma(\varepsilon_a A_a T_a^4 - \varepsilon_w A_w T_w^4).$$

$\sigma = 5{,}67 \cdot 10^{-8} \mathrm{Wm}^{-2}\mathrm{K}^{-4}$ ist die Stefan-Boltzmann-Konstante. $\varepsilon$ bezeichnet den Absorptionsgrad, A die Fläche und T die absolute Temperatur der abstrahlenden Fläche. Der Index 'a' steht für die strahlungsaktiven Flächen des Katalysators und der Index 'w' für die Austauschfläche des Wärmetauschers.

$\Delta P$ steigt also bei gleichbleibender Temperatur $T_w$ des Wärmetauschermediums in etwa mit der vierten Potenz der Temperatur $T_a$ der strahlungsaktiven Fläche des Katalysators an. Bei hohen Temperaturen wird somit wesentlich mehr Wärme übertragen als bei niedrigen. Die Strahlungskühlung schützt den Katalysator insbesondere dann, wenn er zur Erhöhung der Heizleistung als katalytischer Brenner betrieben wird.

Damit die Strahlungskühlung den Katalysator effektiv vor thermischer Zerstörung schützen kann, sollte er eine möglichst große strahlungsaktive Fläche $A_a$ im Vergleich zu seiner restlichen Oberfläche (nicht abstrahlende bzw. thermisch isolierte Flächen) aufweisen. Da die strahlungsaktiven Flächen des Katalysators in der Regel seine Ein- und Austrittsflächen für das Abgas sein werden, bedeutet dies unabhängig von der Form des Katalysatormonolithen, daß der Abstand zwischen Ein- und Austrittsflächen relative klein im Verhältnis zur lateralen Ausdehnung des Katalysatormonolithen sein sollte. Gute Voraussetzungen für eine Strahlungskühlung sind gegeben, wenn das Verhältnis der strahlungsaktiven Flächen zur restlichen Oberfläche des Katalysators zwischen 0,5 und 100, bevorzugt zwischen 2 und 10, liegt. Werden Katalysatornetze verwendet, kann der Wert von 100 deutlich überschritten werden.

Im konkreten Fall eines Katalysatorkörpers in Form eines Kreiszylinders mit Strömungskanälen, die parallel zur Zylinderachse ausgerichtet sind, bilden die beiden Stirnflächen die strahlungsaktiven Flächen. Die Mantelfläche eines solchen Katalysatorkörpers ist im Konverter durch eine thermisch isolierende Matte gehaltert, so daß eine effektive Wärmeabstrahlung von dieser Fläche nur stark eingeschränkt möglich ist. Für einen solchen Katalysator bedeutet ein Flächenverhältnis von 0,5 (Stirnflächen zur Mantelfläche), daß die Länge des Kreiszylinders gleich seinem Durchmesser ist. Für kleinere Verhältnisse verliert die Strahlungskühlung über die Stirnflächen immer mehr an Bedeutung. Bevorzugt werden daher scheibenförmige Katalysatorkörper mit Flächenverhältnissen von über 2 eingesetzt. Das zweckmäßige Flächenverhältnis ist nach oben nur durch die gewünschte Stärke der Strahlungskühlung und durch die mit zunehmendem Flächenverhältnis schlechter werdende mechanische Stabilität des Katalysatorkörpers begrenzt. Oberhalb eines Verhältnisses von 10 ist die mechanische Stabilität eines scheibenförmigen Katalysatorkörpers aus keramischem Material ohne weitere Unterstützungsmaßnahmen nicht mehr gewährleistet.

Als Katalysatoren eignen sich alle aus dem Stand der Technik bekannten Ausführungsformen. Geeignet sind monolithische Katalysatoren mit einer offenporigen Filterstruktur wie zum Beispiel Schäume, Netze oder Faserstrukturen, die unregelmäßige und miteinander verbundene Strömungspfade für das Abgas von der Eintrittsseite zur Austrittsseite aufweisen, oder die schon erwähnten wabenförmigen Katalysatoren mit regelmäßig angeordnete Strömungspfade für das Abgas in Form von parallelen Strömungskanälen, die als sogenannte Wandflußfilter mit wechselseitig verstopften Strömungskanälen aber auch als Wabenkörper mit beidseitig offenen Strömungskanälen eingesetzt werden.

Die Emissivität (beziehungsweise Absorptionsgrad) offenporiger Katalysatormonolithe und auch die Emissivität der parallel ausgerichteten Strömungskanäle von Wabenkörpern ist deutlich größer als die Emissivität der Katalysatorbeschichtung. Eine gute Emissivität ist bei Wabenkörpern, fast unabhängig vom Wandmaterial, dann gegeben, wenn das Verhältnis von Kanalradius zur Kanallänge kleiner als 0,1 ist (analoges gilt auch für quadratische Kanäle).

Durch den Betrieb des Katalysators als katalytischer Brenner erhöht sich der Kraftstoffverbrauch. Gegenüber einer konventionellen Zusatzheizung auf Basis eines Flammenbrenners ergibt sich jedoch immer noch eine Kraftstoffeinsparung, da nur ein Teil der benötigten Wärme durch zusätzliche Kraftstoffeindüsung erzeugt werden muß. Der restliche Teil wird durch den Wärmeinhalt des Abgases und die bei der Schadstoffumsetzung frei werdende Reaktionswärme geliefert.

Da der eingedüste Kraftstoff am Katalysator bei Temperaturen unter 1300°C katalytisch verbrannt wird, entfällt hierbei die bei Flammenbrennern auftretende Bildung von Stickoxiden. Die Stickoxidemissionen sind also gegenüber einer konventionellen Standheizung deutlich verringert und weitgehend bestimmt von den im Kraftstoff gebundenen Stickstoffanteilen.

In einer bevorzugten Ausführungsform der Zusatzheizung ist die Apparatur zur Eindüsung des Kraftstoff/Luft-Gemisches mit einer Zündvorrichtung versehen, so daß sie auch als Flammenbrenner mit einer homogenen Verbrennung des Kraftstoff/Luft-Gemisches betrieben werden kann. Diese Betriebsart wird genutzt, um den Katalysator beim Kaltstart auf seine Betriebstemperatur aufzuheizen. Nach Erreichen der Betriebstemperatur des Katalysators wird die Flamme durch kurzes Unterbrechen der Kraftstoffzufuhr gelöscht. Falls notwendig, wird danach die Kraftstoffzufuhr wieder geöffnet, um den Katalysator mit dem Kraftstoff/Luft-Gemisch für die katalytische Verbrennung zu versorgen.

Zusätzlich zu einer sehr schnellen Beheizung des Fahrgastraumes hat diese Variante der Zusatzheizung den Vorteil, daß der Katalysator während des Kaltstarts sehr schnell seine volle Leistungsfähigkeit erreicht. Die üblicherweise während des Kaltstarts zu beobachtenden Kohlenwasserstoffemissionen wegen noch nicht ausreichender Katalysatortemperatur werden dadurch wesentlich vermindert. Durch den Betrieb der Apparatur zur Eindüsung des Kraftstoff/Luft-Gemisches während des Kaltstarts als Flammenbrenner werden in dieser Betriebsphase zusätzliche Stickoxide erzeugt, die wegen der noch nicht erreichten Arbeitstemperatur des Katalysators nicht vollständig umgesetzt werden können. Da diese Betriebsphase jedoch nur von kurzer Dauer ist und die Emissionen eines solchen Brenners vergleichsweise niedrig sind, verschlechtert sich dadurch die Gesamtbilanz der Schadstoffumsetzung durch den Konverter nicht wesentlich. Wird auf die Funktion der Beheizung des Fahrgastraumes bei Motorstillstand und auf die Möglichkeit der Katalysatorvorheizung zur Verminderung der Kaltstartemissionen verzichtet, ist eine Startvorrichtung für den Betrieb des katalytischen Brenners nicht notwendig. Das System arbeitet dann nur als Zusatzheizung und Element zur Wärmeauskopplung aus dem heißen Abgas.

Bevorzugt wird für die katalytische Verbrennung Motorkraftstoff in den Konverter vor dem Katalysator eindosiert. Es können jedoch auch andere Brennstoffe wie zum Beispiel Erdgas oder Wasserstoff eingesetzt werden. Der Einsatz von Wasserstoff hat den Vorteil, daß eine homogene Verbrennung nur bei Temperaturen unterhalb von 0°C benötigt wird. Oberhalb von 0°C kann Wasserstoff schon vom Katalysator katalytisch verbrannt werden.

Zum Betrieb der Zusatzheizung weist diese weitere Komponenten wie Temperaturfühler, Luft- und Kraftstoffpumpen und elektronische Steuerelemente auf, die eine korrekte zeitliche Abfolge der verschiedenen Betriebsphasen der Zusatzheizung gewährleisten. Obwohl für den Betrieb der Zusatzheizung notwendig, sind diese Komponenten jedoch nicht erfindungswesentlich. Bei Neufahrzeugen kann die Steuerung der Zusatzheizung in die elektronische Steuerung des Fahrzeugs integriert werden.

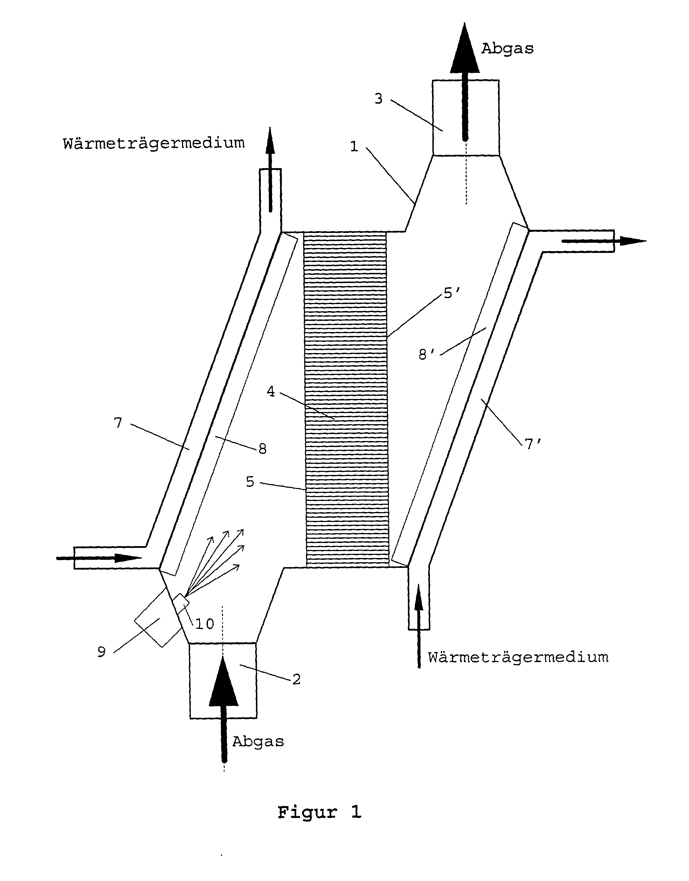

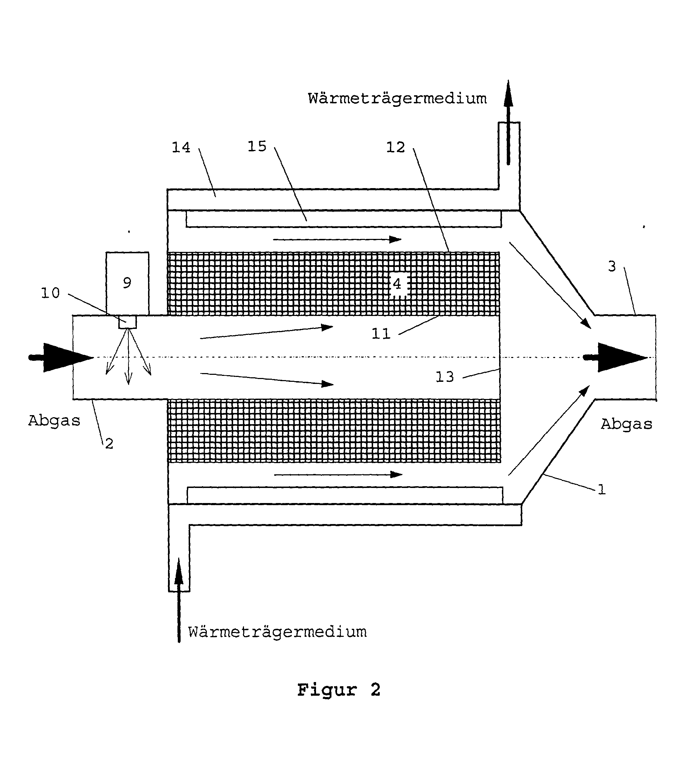

Figur 1 und 2 zeigen beispielhafte Ausführungsformen der erfindungsgemäßen Zusatzheizung.

**Beispiel 1:**

Figur 1 zeigt eine Zusatzheizung mit einem Katalysatormonolithen in Form einer Scheibe. Bezugsziffer 1 bezeichnet den Abgasreinigungskonverter mit den Anschlußstutzen 2 und 3 für die Abgasleitungen. 4 bezeichnet den Abgasreinigungskatalysator mit den parallelen Strömungskanälen für das Abgas. 5 ist die Eintrittsstirnfläche und 5' die Austrittsstirnfläche des Katalysators. In Strömungsrichtung des Abgases hinter dem Katalysator befindet sich der Wärmetauscher 7', der die Restwärme des Abgases und die am Katalysator frei werdende Reaktionswärme auf ein Wärmeträgermedium für die Beheizung des Fahrgastraumes überträgt. Um dem Abgas wirkungsvoll Wärme entziehen zu können, weist der Wärmetauscher auf seiner dem Katalysator zugewandten Austauschfläche Rippen 8' auf, die parallel zur Strömungsrichtung des Abgases angeordnet sind. Austrittsstirnfläche 5' des Katalysators und Austauschfläche des Wärmetauschers sind so zueinander angeordnet, daß sie miteinander in einen freien Strahlungsaustausch treten können.

Zur Eindüsung des Kraftstoff/Luft-Gemisches weist der Konverter in Strömungsrichtung des Abgases vor dem Katalysator eine Apparatur 9 mit einer Düse 10 auf. Um schon im Stand des Fahrzeugs oder während der Kaltstartphase den Fahrgastraum beheizen zu können, ist diese Apparatur mit einer nicht gezeichneten Zündeinrichtung ausgerüstet, mit der das Kraftstoff/ Luft-Gemisch gezündet werden kann. Das Gemisch verbrennt hierbei in einer offenen Flamme und heizt den Katalysator auf seine Betriebstemperatur von etwa 300 bis 500°C auf. Nach Erreichen der Betriebstemperatur des Katalysators kann die Flamme gelöscht werden. Danach erfolgt die weitere Wärmeerzeugung durch katalytische Verbrennung des mit der Düse 10 in den Abgasreinigungskonverter eingeführten Kraftstoff/ Luft-Gemisches. Bezugsziffer 7 bezeichnet einen vor dem Katalysator in das Konvertergehäuse integrierten zweiten Wärmetauscher mit in den Konverter hineinragenden Rippen 8.

Unter der Annahme einer kreisförmigen Katalysatorscheibe mit einem Volumen von 1000 cm$^3$ und einer Dicke von 2,5 cm beträgt das Verhältnis der beiden strahlungsaktiven Stirnflächen zur Mantelfläche 6,3. Der Durchmesser der Scheibe ist in diesem Fall etwa 22,5 cm groß.

## Beispiel 2:

Figur 2 zeigt weitere Ausführungsform der erfindungsgemäßen Zusatzheizung. Der Katalysator 4 besteht aus einem Schaumkeramikträger in Form eines Hohlzylinders. Er ist in dem Konvertergehäuse 1 konzentrisch angeordnet. Das Abgas wird dem Katalysator über den Stutzen 2 von innen zugeführt und durchströmt den Katalysator in radialer Richtung nach außen. Die Abgaseintrittsfläche ist die innere Mantelfläche 11 des Hohlzylinders, die Austrittsfläche wird durch die äußere Mantelfläche 12 gebildet. Damit das Abgas gezwungen ist, radial durch den Hohlzylinder nach außen zu fließen, ist er am Ende durch eine Platte 13 verschlossen. Das Konvertergehäuse ist zur Bildung eines Wärmetauschers 14 doppelwandig aufgebaut. Der gebildete Hohlraum wird zur Abführung der Wärme von einem Wärmeträgermedium durchflossen. Auf die Innenwand des Konvertergehäuses sind Längsrippen 15 aufgesetzt, um dem Abgas Wärme zu entziehen. Die Strahlungskühlung des Katalysators erfolgt von der äußeren Mantelfläche 12 des Katalysators zur umgebenden Innenwandfläche des Konvertergehäuses. Wie in Beispiel 1 bezeichnen 9 und 10 die Vorrichtung zur Eindüsung von Kraftstoff in den Abgasstrom.

Bei gleichem Katalysatorvolumen wie in Beispiel 1, einem Innendurchmesser von 5 und einem Außendurchmesser von 10 cm weist der Hohlzylinder eine Länge von etwa 17 cm auf. Die Dicke des Katalysators beträgt hier wie in Beispiel 1 2,5 cm. Das Verhältnis seiner strahlungsaktiven äußeren Mantelfläche zu den restlichen Flächen (2 Stirnflächen und innere Mantelfläche) beträgt 1,4. Auch bei dieser Zusatzheizung ist ein Wärmetauscher vor dem Katalysator möglich. Er muß durch entsprechende konstruktive Maßnahmen im Hohlzylinder angeordnet werden. In diesem Fall ist dann auch die innere Mantelfläche des Hohlzylinders eine strahlungsaktive Fläche. Das Flächenverhältnis erhöht sich entsprechend. Da ein Hohlzylinder gute Stabilitätseigenschaften aufweist, kann die Katalysatordikke gegenüber einer einfachen Scheibe deutlich verringert werden. Hierdurch werden Flächenverhältnisse von bis zu 100 leicht zugänglich. Bei Verwendung von Katalysatornetzen werden Flächenverhältnisse von deutlich über 100 erreicht.

**Patentansprüche**

1. Zusatzheizung für ein Kraftfahrzeug mit Verbrennungsmotor, welche ein in die Abgasleitung des Kraftfahrzeugs eingebautes Konvertergehäuse mit einem Abgasreinigungskatalysator enthält sowie einen vor und/oder hinter dem Katalysator in das Konvertergehäuse integrierten Wärmetauscher und eine vor dem Katalysator in die Abgasleitung integrierte Apparatur zur Eindüsung eines Kraftstoff/Luft-Gemisches, wobei der Abgasreinigungskatalysator von seiner Abgas-Eintrittsfläche zur Austrittsfläche von einer Vielzahl von Strömungspfaden für das Abgas durchzogen wird, **dadurch gekennzeichnet,**
   **daß** der Katalysator wenigstens eine strahlungsaktive Fläche besitzt und der oder die Wärmetauscher Austauschflächen aufweisen, die sowohl mit den strahlungsaktiven Flächen des Katalysators in einen freien Strahlungsaustausch als auch mit dem Abgas in einen Wärmeaustausch treten können und daß das Verhältnis der strahlungsaktiven Flächen des Katalysators zu seiner restlichen Oberfläche zwischen 0,5 und 100, bevorzugt zwischen 2 und 10, liegt.

2. Zusatzheizung nach Anspruch 1,
   **dadurch gekennzeichnet,**
   **daß** die Apparatur zur Eindüsung des Kraftstoff/ Luft-Gemisches eine Zündvorrichtung aufweist.

3. Zusatzheizung nach einem der vorstehenden Ansprüche,
   **dadurch gekennzeichnet,**
   **daß** als Wärmetauscher Abgas/Wasser-Wärmetauscher und/oder Abgas/Luft-Wärmetauscher eingesetzt werden.

## Claims

1. Supplementary heating for a motor vehicle having an internal combustion engine, which contains a converter housing with a catalyst for exhaust gas purification incorporated into the exhaust pipe of the motor vehicle, as well as a heat exchanger integrated into the converter housing in front of and/or behind the catalyst and, integrated into the exhaust pipe in front of the catalyst, an apparatus for injecting a motor fuel/air mixture, with the catalyst for exhaust gas purification being traversed from its inlet surface for the exhaust gas to the outlet surface by a multiplicity of flow paths for the exhaust gas, **characterised in that** the catalyst has at least one heat-radiating surface and the heat exchanger or heat exchangers has/have exchange surfaces which can enter both into a free exchange of radiation with the heat-radiating surfaces of the catalyst and into an exchange of heat with the exhaust gas, and **in that** the ratio of the heat-radiating surface area of the catalyst to the remainder of its surface area is between 0.5 and 100, preferably between 2 and 10.

2. Supplementary heating according to claim 1, **characterised in that** the apparatus for injecting the motor fuel/air mixture has an ignition device.

3. Supplementary heating according to one of the preceding claims, **characterised in that** the heat exchangers used are exhaust gas/water heat exchangers and/or exhaust gas/air heat exchangers.

## Revendications

1. Chauffage complémentaire pour un véhicule automobile à moteurs à combustion interne, comportant un boîtier de convertisseur monté dans la conduite des gaz d'échappement du véhicule et ayant un catalyseur de nettoyage des gaz d'échappement, ainsi qu'un échangeur de chaleur intégré en amont et/ou en aval du catalyseur dans le boîtier de convertisseur, et un appareillage intégré dans la conduite des gaz d'échappement en amont du catalyseur pour injecter un mélange carburant/air, le catalyseur de nettoyage des gaz d'échappement étant traversé de sa surface d'entrée des gaz d'échappement vers sa surface de sortie par un grand nombre de chemins de circulation des gaz d'échappement, **caractérisé en ce que**

le catalyseur possède au moins une surface rayonnante active et le ou les échangeurs de chaleur ont des surfaces d'échange qui peuvent assurer aussi bien un échange de rayonnement libre avec les surfaces rayonnantes actives du catalyseur, qu'un échange de chaleur avec les gaz d'échappement, et le rapport des surfaces rayonnantes actives du catalyseur à sa surface résiduelle est compris entre 0,5 et 100 et de préférence entre 2 et 10.

2. Chauffage complémentaire selon la revendication 1, **caractérisé en ce que** l'appareillage pour injecter le mélange carburant/air comporte un dispositif d'allumage.

3. Chauffage complémentaire selon l'une quelconque des revendications précédentes, **caractérisé en ce que** l'échangeur de chaleur est un échangeur gaz d'échappement/eau ou/et un échangeur gaz d'échappement/air.

Figur 1

Wärmeträgermedium

14    15    12

10

9

4

11

3

Abgas

2

13

Abgas

1

Wärmeträgermedium

**Figur 2**